# EUROPEAN PATENT SPECIFICATION

(11) **EP 2 221 509 B1**
(45) Date of publication and mention of the grant of the patent: **21.10.2015**
(21) Application number: 10161890.8
(22) Date of filing: 07.05.2003
(51) Int. Cl.: F16H 57/02, F16D 21/06

(54) **A motor-vehicle transmission**
Kraftfahrzeuggetriebe
Transmission de véhicule à moteur

(30) Priority: 08.05.2002 IT TO20020382
(43) Date of publication of application: 25.08.2010
(62) Divisional of application: 03010242.0
(73) Proprietor: C.R.F. Società Consortile per Azioni, 10043 Orbassano (Torino) (IT)
(72) Inventor: Caenazzo, Dario, 10043 Orbassano (Torino) (IT); Mesiti, Domenico, 10043 Orbassano (Torino) (IT); Pregnolato, Gianluigi, 10043 Orbassano (Torino) (IT); Uberti, Maurizio, 10043 Orbassano (Torino) (IT)
(74) Representative: Rondano, Davide

(56) References cited:
- DE-A1- 10 004 189
- DE-A1- 10 064 459
- DE-A1- 19 914 376
- FR-A1- 2 714 136
- US-A- 3 185 274

## Description

The present invention relates to a motor-vehicle transmission as specified in the preamble of independent claim 1.

A motor-vehicle transmission of this type is known from US-A-3 185 274, which discloses in particular a transmission with a gearbox having two input shafts and with a coupling unit having two dry clutches sharing the same driving portion, i.e. the portion connected for rotation with the crankshaft. The driving portion is supported for rotation on the outer input shaft of the gearbox by means of a radial ball bearing the inner race of which is not axially constrained on that shaft. Moreover, the driving portion is axially secured by means of screws to the crankshaft, whereby the axial forces resulting from actuation of the clutches are discharged onto the crankshaft and thus represent a potential critical factor for the axial supports thereof.

It is therefore an object of the present invention to provide a motor-vehicle transmission which is arranged in a manner such that the axial forces resulting from actuation of the clutches are not discharged onto the crankshaft.

This and other objects are achieved in full according to the invention by a motor-vehicle transmission having the characteristics defined in the characterizing portion of independent claim 1. Further advantageous characteristics of the invention are defined in the dependent claims.

Since in a motor-vehicle transmission according to the present invention the driving portion of the clutch unit is supported for rotation by means of a bearing which is mounted on the input shaft of the gearbox so as to transmit to this shaft the axial forces applied onto the driving portion as a result of the actuation of the clutch(es), the crankshaft, and consequently also its axial supports (usually friction bearings), are not loaded axially during the actuation (disengagement/engagement) of the clutch(es). It is thus possible to increase the axial loads required to actuate the clutch(es) without thereby increasing the stresses on the axial bearings of the crankshaft. At the same time it is possible to reduce stresses on the axial bearings of the crankshaft. At the same time it is possible to reduce the lever arms of the disc springs which bring about the disengagement/engagement of the clutch(es), with a consequent reduction in the actuation travel required.

The characteristics and the advantages of the invention will become clearer from the following detailed description which is given purely by way of non-limiting example with reference to the appended drawings, in which:
Figure 1 is a longitudinal section through a first embodiment according to the present invention of a motor-vehicle transmission having a gearbox with two coaxial input shafts and two clutches;
Figure 2 is a longitudinal section through a second embodiment according to the present invention of a motor-vehicle transmission of the same type as that shown in Figure 1;
Figure 3 is a longitudinal section through a third embodiment according to the present invention of a motor-vehicle transmission having a gearbox with one input shaft and one clutch; and
Figure 4 is a longitudinal section through a fourth embodiment according to the present invention of a motor-vehicle transmission of the same type as that shown in Figure 3.

In the description and the claims which follow, terms such as "longitudinal" or "axial", as well as "radial" or "transverse", are to be intended as referring to the mounted condition of the transmission on a motor vehicle.

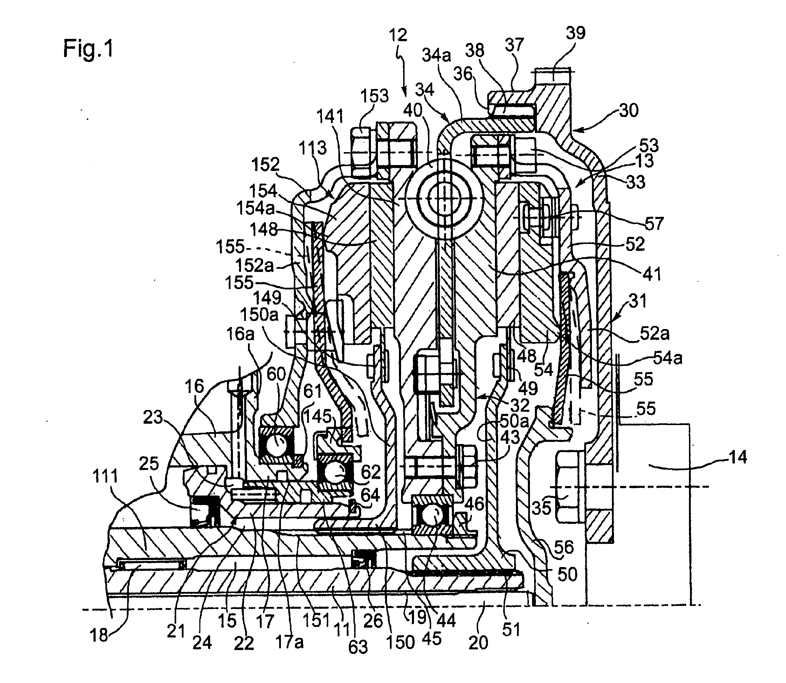

With reference first to Figure 1, a motor-vehicle transmission, advantageously (but not necessarily) of the power-shift type, comprises:
a gearbox, which is not shown since it is known (for example, from Italian patent application ITTO20010286) with two coaxial input shafts, that is, an inner input shaft 11 and an outer input shaft 111, respectively; and
a clutch unit 12 as a coupling unit, with two clutches 13 and 113 of the normally-engaged, single-plate, dry type, for connecting a crankshaft 14 of the internal combustion

The gearbox is enclosed by a support housing 16, shown partially in Figure 1 and having, at the end facing towards the clutch unit 12, a tubular extension 17 with a central axial hole 17a through which the two coaxial input shafts 11 and 111 extend. The outer shaft 111 has a tubular structure with a substantially cylindrical, central, coaxial cavity 15. The cavity 15 houses the inner shaft 11 which is supported for rotation by support elements of known type, including, for example, a needle bearing 18. The inner shaft 11 also has a tubular structure with a substantially cylindrical, central, coaxial cavity 19 in which a rod 20 for actuating the clutch 13 is axially slidable.

A sleeve 21 is interposed radially between the outer input shaft 111 and the cylindrical hole 17a formed in the extension 17 of the support housing 16. At the end facing towards the clutch unit 12, the sleeve 21 forms a cylindrical portion 22 which is coaxial with the two input shafts and which defines, with the cylindrical hole 17a, an outer annular space 23 and, with the shaft 111, an inner annular space 24.

Two oil-seal rings 25 and 26 are fitted between the sleeve 21 and the outer input shaft 111 and between the two input shafts 11 and 111, respectively, to prevent lubricating oil passing from the gearbox compartment, which operates in an oil bath, to the clutch unit 12 which, on the other hand, operates dry.

A two-mass flywheel, generally indicated 30 and comprising a first mass 31 and a second mass 32, is interposed axially between the clutch unit 12 and the crankshaft 14.

The first mass 31 of the flywheel 30 comprises a first element 33 and a second element 34 which are arranged side by side, the first facing towards the engine and the second towards the gearbox.

The first element 33 of the first mass 31 is formed as a disc with an axial section that is variously shaped but extends substantially radially. A plurality of holes are formed in a radially inner position of the first element 33 for the fixing of the element to the crankshaft 14 by means of screws 35 and, in a radially outer position, a tubular extension 37 provided with an internal ring gear 36 projects axially towards the second element 34. The first element 33 also has, on its outer periphery, a ring gear 39 for meshing with a pinion of the electric starter (not shown) for starting the internal combustion engine of the vehicle.

The second element 34 of the first mass 31 also is formed as a disc having a substantially L-shaped axial section with a cylindrical annular portion 34a which projects axially towards the first element 33. A ring gear 38 is formed on the outer periphery of the portion 34a and meshes permanently with the ring gear 36 of the first element 33 so as to connect the two elements 33 and 34 of the first mass 31 for rotation. The second element 34 is also connected to the second mass 32 through a torsional damper 40, such as for example flexible-coupling springs.

The second mass 32 of the flywheel 30 also comprises a first element 41 and a second element 141, both of which are disc-shaped and which are disposed on axially opposite sides of the second element 34 of the first mass 31 and are fixed together by means of screws 43. The second mass 32 is supported for rotation by a radial ball bearing 44 mounted on the outer input shaft 111. The outer race of the bearing 44 is clamped axially between a pair of shoulders provided by the two elements 41 and 141 of the second mass 32. The inner race of the bearing 44 is mounted in axial abutment on one side with a side of a splined portion 45 formed on the outer cylindrical surface of the shaft 111, and is clamped axially on the opposite side by means of a ring nut 46.

The first element 41 of the second mass 32 of the flywheel 30 is also arranged to act as an abutment member for the clutch 13 associated with the inner gearbox input shaft 11.

The clutch 13 is composed of a driven portion and of a driving portion which are fast for rotation with the input shaft 11 and with the crankshaft 14 (via the flywheel 30), respectively, and which can be coupled torsionally with each other to permit the transmission of torque between the shafts 11 and 14.

The driven portion of the clutch 13 comprises a plate 48 which is provided with rings made of friction material on both of its axial faces and which is fixed, by means of rivets 49, to a flange 50a of a hub 50 arranged so as to be axially slidable along a splined end portion 51 of the inner gearbox input shaft 11.

In addition to the above-described first element 41, the driving portion of the clutch 13 comprises a cover 52 fixed to the periphery of the first element 41 by means of screws 53 and having a substantially vertical wall 52a which extends radially inwards on the axially opposite side of the plate 48 to the first element 41. An axially movable clutch pressure plate 54 interposed between the plate 48 and the cover 52 is restrained for rotation with the latter by means of tangential tabs 57. The clutch pressure plate 54 is urged axially against the plate 48 by a disc spring 55 so that the plate 48 is kept clamped between the first element 41 and the pressure plate 54 and can therefore transmit torque with these two components as a result of the friction between the axial abutment surfaces.

The disc spring 55 is clamped axially between its two radially outer and radially inner end portions, respectively, by the vertical wall 52a of the cover 52 and by a disc-shaped engagement element 56 which can be moved axially by the actuating rod 20. When the spring is not deformed, that is, when no command is imparted to the clutch 13 by means of the rod 20, a radially intermediate portion of the spring 55 exerts a leftward axial pressure (as observed in Figure 1) against a projection 54a of the clutch pressure plate 54, thus keeping the clutch 13 engaged.

In order to disengage the clutch 13 it is necessary to move the actuating rod 20 towards the right along the cavity 19 of the inner input shaft 11 so as to urge the radially inner portion of the spring 55 by means of the engagement element 56. The spring 55 pivots on the cover 52 and thus tends to rotate about its radially outer edge until it achieves the deformed configuration shown in broken line in Figure 1. In this condition, the clutch pressure plate 54, which is no longer subject to the axial pressure of the spring 55, moves away from the plate 48 by virtue of the action of the tangential tabs 57, thus interrupting the transmission of torque between the driving portion and the driven portion of the clutch.

The structure of the clutch 113 associated with the outer gearbox input shaft 111 will now be described, again with reference to Figure 1, in which the components and parts of the clutch 113 which correspond in structure and/or function to those of the clutch 13 are indicated by the same reference numerals but increased by 100.

The clutch 113 is composed of a driven portion and of a driving portion which are fast for rotation with the outer input shaft 111 and with the crankshaft 14 (via the flywheel 30), respectively, and which can be coupled torsionally with each other to permit the transmission of torque between the shafts 111 and 14.

The driven portion of the clutch 113 comprises a plate 148 which is provided with rings made of friction material on both of its axial faces and which is fixed by means of rivets 149 to a flange 150a of a hub 150 arranged so as to be slidable axially along a splined portion 151 of the outer gearbox input shaft 111.

The driving portion of the clutch 113 basically comprises:
an abutment member provided by the second element 141 of the second mass 32 of the flywheel 30;
a cover 152 fixed by screws 153 to the periphery of the second element 141 and having a substantially vertical wall 152a which extends radially inwards on the axially opposite side of the plate 148 to the second element 141, separating the clutch unit 12 from the gearbox; and
an axially movable clutch pressure plate 154 interposed between the plate 148 and the cover 152 and restrained for rotation with the latter by means of tangential tabs (not visible in Figure 1).

The cover 152 is supported for rotation by a radial ball bearing 60 fitted on the tubular extension 17 of the gearbox housing 16. The outer race of the bearing 60 is free axially, whereas the inner race is clamped by a snap ring 61 against a shoulder formed in the housing 16.

In rest conditions, that is, when the driver of the vehicle is not imparting any commands to the clutch, the plate 148 is kept clamped between the second element 141 and the clutch pressure plate 154 as a result of the axial pressure exerted by a disc spring 155 on the plate 154.

The disc spring 155 is restrained on the vertical wall 152a of the cover 152 and bears, with its two radially outer and radially inner end portions, respectively, against a projection 154a of the clutch pressure plate 154, and against an annular engagement element 145. The element 145 is supported for rotation by a radial ball bearing 62 mounted on an end of a plunger 63.

The plunger 63 is arranged so as to be slidable axially in the annular space 23 formed between the cylindrical portion 22 of the sleeve 21 and the tubular extension 17 of the gearbox support housing 16. The supply of oil under pressure to the annular space 23 from a duct formed in a vertical wall 16a of the gearbox housing 16 brings about rightward axial movement of the plunger 63 as far as a travel-limit position defined by a snap ring 64 fitted on the end of the sleeve 22 facing the engine. By means of the engagement element 145, the plunger 63 pulls along the radially inner end portion of the spring 155 which thus tends to pivot about its radially intermediate portion, which is restrained on the cover 152, until it achieves the deformed configuration shown in broken outline in Figure 1. In this condition, the clutch pressure plate 154, which is no longer subject to the axial pressure of the spring 155, moves away from the plate 148 by virtue of the action of the tangential tabs, thus interrupting the transmission of torque between the driving portion and the driven portion of the clutch 113.

Due to the fact that the driving portions of the two clutches 13 and 113, and more specifically the abutment members 41 and 141, are supported for rotation on the outer input shaft 111 of the gearbox by means of the bearing 44, which is a bearing able to withstand axial loads, due to the fact that the outer race of the bearing 44 is axially locked or restrained with respect to the abutment members 41 and 141 in such a manner that the axial forces applied onto the abutment members 41 and 141 as a result of the actuation of the clutches are transmitted to the outer race of this bearing, and due to the fact that the inner race of the bearing 44 is axially locked or restrained with respect to the outer input shaft 111 of the gearbox in such a manner as to transmit to that shaft the axial forces applied on it as a result of the actuation of the clutches, the axial forces resulting from actuation of the clutches are transmitted to the outer input shaft 111 of the gearbox, instead of the crankshaft, and do not therefore load the axial supports of the crankshaft.

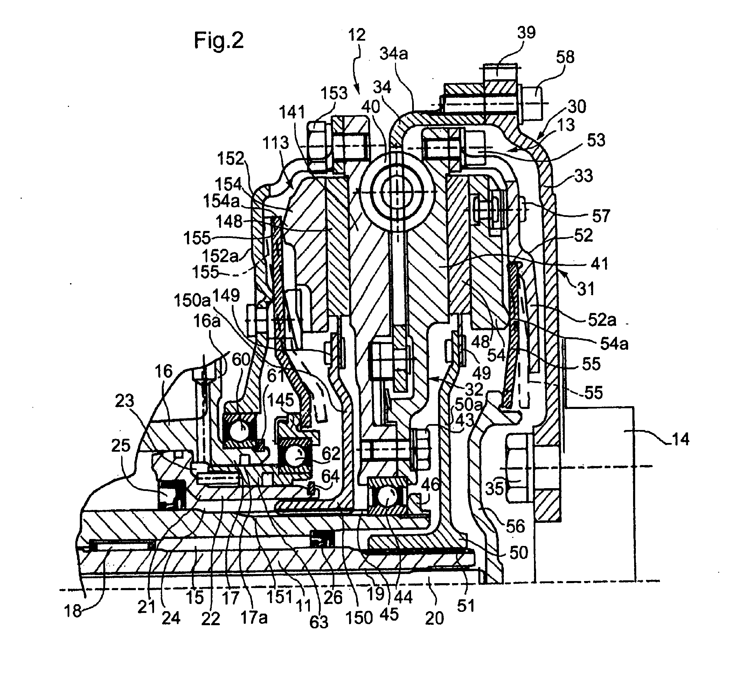

A second embodiment according to the present invention of a motor-vehicle transmission provided with a gearbox with two coaxial input shafts and two clutches is shown in Figure 2, in which parts and elements identical or corresponding to those of Figure 1 have been given the same reference numerals.

As is clear from a comparison between Figures 1 and 2, this second embodiment is substantially identical to the first one described above, with the difference that the first and second elements 33 and 34 of the first mass 31 of the flywheel 30 are connected for rotation with one another by means of screws 58 instead of by meshing between respective ring gears 36 and 38.

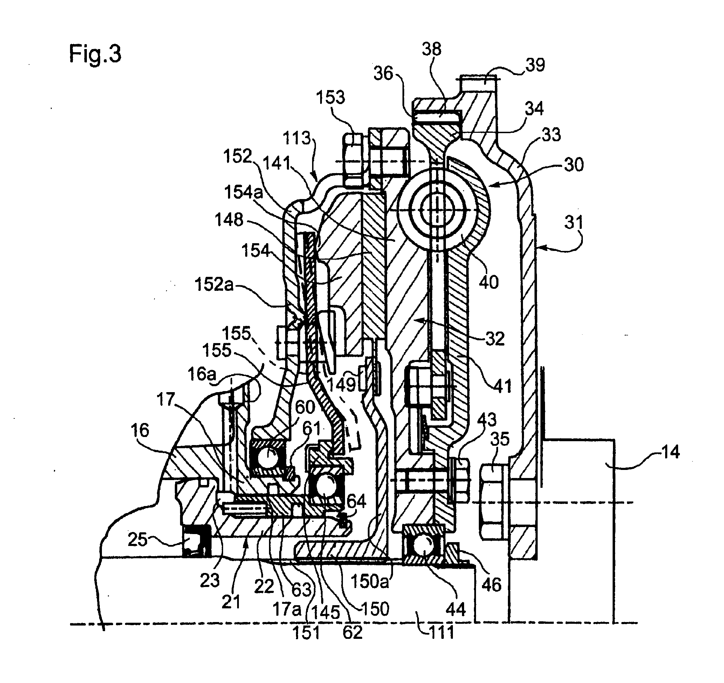

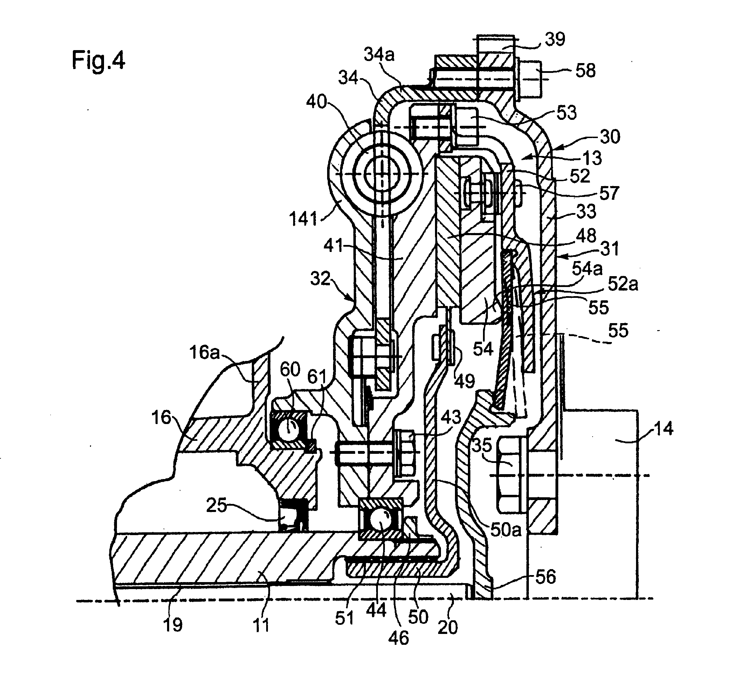

Figures 3 and 4 show two preferred embodiments according to the present invention of a motor-vehicle transmission provided with a gearbox having only one input shaft and only one clutch. These embodiments will not be described in further detail since they are clearly based on the two embodiments described above.

In particular, the third embodiment of the present invention shown in Figure 3 is derived from the part of the transmission of Figure 1 that comprises the clutch 113 associated with the outer gearbox input shaft 111. For this reason, all of the components forming part of the clutch of the transmission of Figure 3 are indicated by the same reference numerals as those used for the corresponding components of the clutch 113 of the transmission of Figure 1.
In particular, in the embodiment of Figure 3 the abutment member 41 is also supported for rotation on the input shaft 111 of the gearbox by means of the bearing 44, which is a bearing able to withstand axial loads. Moreover, also in the embodiment of Figure 3 the outer race of the bearing 44 is axially locked or restrained with respect to the abutment member 41 in such a manner that the axial forces applied onto the abutment member 41 as a result of the actuation of the clutch 113 are transmitted to the outer race of this bearing, whilst the inner race of the bearing 44 is axially locked or restrained with respect to the input shaft 111 of the gearbox in such a manner as to transmit to that shaft the axial forces applied on it as a result of the actuation of the clutch 113. Accordingly, the axial forces resulting from actuation of the clutch are transmitted to the input shaft of the gearbox, instead of the crankshaft, and do not therefore load the axial supports of the crankshaft.

The same applies to the fourth embodiment of the present invention shown in Figure 4 which is based on the structure of the clutch 13 of the transmission of Figure 2. In comparison with the third embodiment, this fourth embodiment with only one clutch has the advantage of being more compact axially by virtue of the sliding-rod clutch-actuating mechanism.

In particular, in the embodiment of Figure 4 the abutment member 41 is also supported for rotation on the input shaft 11 of the gearbox by means of the bearing 44, which is a bearing able to withstand axial loads. Moreover, also in the embodiment of Figure 3 the outer race of the bearing 44 is axially locked or restrained with respect to the abutment member 41 in such a manner that the axial forces applied onto the abutment member 41 as a result of the actuation of the clutch 13 are transmitted to the outer race of this bearing, whilst the inner race of the bearing 44 is axially locked or restrained with respect to the input shaft 11 of the gearbox in such a manner as to transmit to that shaft the axial forces applied on it as a result of the actuation of the clutch 13. Accordingly, the axial forces resulting from actuation of the clutch are transmitted to the input shaft of the gearbox, instead of the crankshaft, and do not therefore load the axial supports of the crankshaft.

Naturally, the principle of the invention remaining the same, the embodiments and manufacturing details may be varied widely with respect to those described and illustrated purely by way of non-limiting example.

## Claims

1. A motor-vehicle transmission comprising:
a gearbox having at least one input shaft (11, 111);
a clutch unit (12) having at least one clutch (13, 113) operable to connect the crankshaft (14) for rotation with said at least one input shaft (11, 111), wherein said at least one clutch (13, 113) includes a driven portion (48, 50, 148, 150) connected for rotation with said at least one input shaft (11, 111) and a driving portion (41, 52, 54, 141, 152, 154) connected for rotation with the crankshaft (14); and
a bearing (44) which supports for rotation the driving portion (41, 52, 54, 141, 152, 154) on said at least one input shaft (11, 111) and which is able to withstand axial loads, the bearing (44) having an inner race which is mounted on said at least one input shaft (11, 111) and an outer race which is axially locked or restrained with respect to the driving portion (41, 52, 54, 141, 152, 154);
**characterized in that** the inner race of the bearing (44) is axially locked or restrained on both sides with respect to said at least one input shaft (11, 111) and **in that** the outer race of the bearing (44) is axially locked or restrained on both sides with respect to the driving portion (41, 52, 54, 141, 152, 154), in such a manner that the axial forces resulting from actuation of said at least one clutch (13, 113) are transmitted through the bearing (44) to said at least one input shaft (11, 111).

2. A transmission according to claim 1, wherein the bearing (44) is a radial ball bearing.

3. A transmission according to claim 1 or claim 2, wherein the gearbox has two coaxial input shafts (11, 111), namely an inner shaft (11) and an outer hollow shaft (111), wherein the clutch unit (12) has two clutches (13, 113) operable to connect the crankshaft (14) for rotation with the inner input shaft (11) and the outer input shaft (111), respectively, and wherein the bearing (44) supports the driving portions (41, 52, 54, 141, 152, 154) of the two clutches (13, 113) for rotation on the outer input shaft (111).

4. A transmission according to claim 3, wherein the driving portions (41, 52, 54, 141, 152, 154) of the two clutches (13, 113) comprise each a respective abutment member (41, 141) intended to be connected for rotation with the crankshaft (14), wherein the driven portions (48, 50, 148, 150) of the two clutches (13, 113) comprise each a respective friction plate (48, 148) which is connected for rotation with a respective input shaft (11, 111) and is configured to be clamped against the respective abutment member (41, 141), and wherein both the abutment members (41, 141) are supported for rotation by the bearing (44).

5. A transmission according to claim 4, wherein the outer race of the bearing (44) is clamped axially between a pair of shoulders provided by the abutment member (41, 141) of the two clutches (13, 113).

6. A transmission according to claim 1 or claim 2, wherein the gearbox has one input shaft (11, 111), wherein the clutch unit (12) has one clutch (13, 113) operable to connect the crankshaft (14) for rotation with the input shaft (11, 111), and wherein the bearing (44) supports the driving portion (41, 52, 54, 141, 152, 154) of the clutch (13, 113) for rotation on the input shaft (11, 111).

7. A transmission according to Claim 6, wherein the driving portion (41, 52, 54, 141, 152, 154) of the clutch (13, 113) comprises an abutment member (41, 141) intended to be connected for rotation with the crankshaft (14), wherein the driven portion (48, 50, 148, 150) of the clutch (13, 113) comprises a friction plate (48, 148) which is connected for rotation with the input shaft (11, 111) and is configured to be clamped against the abutment member (41, 141), and wherein the abutment member (41, 141) is supported for rotation by the bearing (44) on the input shaft (11, 111).

8. A transmission according to any of the preceding claims, wherein said at least one clutch (13, 113) is a normally-engaged dry friction clutch.

## Patentansprüche

1. Kraftfahrzeuggetriebe, umfassend:
ein Getriebe mit mindestens einer Eingangswelle (11, 111);
eine Kupplungseinheit (12) mit mindestens einer Kupplung (13, 113), die in Funktion die Kurbelwelle (14) zur Drehung mit der mindestens einen Eingangswelle (11, 111) verbinden kann, wobei die mindestens eine Kupplung (13, 113) einen angetriebenen Teil (48, 50, 148, 150) beinhaltet, der zur Drehung mit der mindestens einen Eingangswelle (11, 111) verbunden ist und einen antreibenden Teil (41, 52, 54, 141, 152, 154), der zur Drehung mit der Kurbelwelle (14) verbunden ist; und
ein Lager (44), das die Drehung des antreiben Teils (41, 52, 54, 141, 152, 154) an der mindestens einen Eingangswelle (11, 111) lagert und das dazu fähig ist, axiale Lasten auszuhalten, wobei das Lager (44) einen Innenring aufweist, der an der mindestens einen Eingangswelle (11, 111) montiert ist, und einen Außenring, der axial fixiert oder bezüglich dem antreibenden Teil (41, 52, 54, 141, 152, 154) gehalten wird;
**dadurch gekennzeichnet, dass** der Innenring des Lagers (44) auf beiden Seiten axial fixiert ist oder bezüglich der mindestens einen Eingangswelle (11, 111) gehalten wird, und dadurch, dass der Außenring des Lagers (44) auf beiden Seiten axial fixiert ist oder bezüglich dem antreibenden Teil (41, 52, 54, 141, 152, 144) gehalten wird, auf solche Weise, dass die Axialkräfte, die aus der Betätigung der mindestens einen Kupplung (13, 113) herrühren, durch das Lager (44) auf die mindestens eine Eingangswelle (11, 111) übertragen werden.

2. Getriebe nach Anspruch 1, wobei das Lager (44) ein Radialkugellager ist.

3. Getriebe nach Anspruch 1 oder 2, wobei das Getriebe zwei koaxiale Eingangswellen (11, 111) aufweist, nämlich eine innere Welle (11) und eine äußere Hohlwelle (111), wobei die Kupplungseinheit (12) zwei Kupplungen (13, 113) aufweist, die in Funktion die Kurbelwelle (14) zur Drehung mit der inneren Eingangswelle (11) bzw. der äußeren Eingangswelle (111) verbinden können, und wobei das Lager (44) die antreibenden Teile (41, 52, 54, 141, 152, 154) der zwei Kupplungen (13, 113) zur Drehung mit der äußeren Eingangswelle (111) lagert.

4. Getriebe nach Anspruch 3, wobei die antreibenden Teile (41, 52, 54, 141, 152, 154) der zwei Kupplungen (13, 113) jeweils ein Anschlagelement (41, 141) umfassen, das dazu vorgesehen ist, zur Drehung mit der Kurbelwelle (14) verbunden zu werden, wobei die angetriebenen Teile (48, 50, 148, 150) der zwei Kupplungen (13, 113) jeweils eine Reibscheibe (48, 148) umfassen, die zur Drehung mit einer entsprechenden Eingangswelle (11, 111) verbunden und dazu konfiguriert ist, an das entsprechende Anschlagelement (41, 141) geklemmt zu werden, und wobei beide Anschlagelemente (41, 141) zur Drehung durch das Lager (44) gelagert sind.

5. Getriebe nach Anspruch 4, wobei der Außenring des Lagers (44) axial zwischen ein Paar Absätze geklemmt ist, die an dem Anschlagelement (41, 141) der zwei Kupplungen (13, 113) vorgesehen sind.

6. Getriebe nach Anspruch 1 oder 2, wobei das Getriebe eine Eingangswelle (11, 111) aufweist, wobei die Kupplungseinheit (12) eine Kupplung (13, 113) aufweist, die in Funktion die Kurbelwelle (14) zur Drehung mit der Eingangswelle (11) verbinden kann, und wobei das Lager (44) den antreibenden Teil (41, 52, 54, 141, 152, 154) der Kupplung (13, 113) zur Drehung an der Eingangswelle (111) lagert.

7. Getriebe nach Anspruch 6, wobei der antreibende Teil (41, 52, 54, 141, 152, 154) der Kupplung (13, 113) ein Anschlagelement (41, 141) umfasst, das dazu vorgesehen ist, zur Drehung mit der Kurbelwelle (14) verbunden zu werden, wobei der angetriebene Teil (48, 50, 148, 150) der Kupplung (13, 113) eine Reibscheibe (48, 148) umfasst, die zur Drehung mit der Eingangswelle (11, 111) verbunden und dazu konfiguriert ist, an das Anschlagelement (41, 141) geklemmt zu werden, und wobei das Anschlagelement (41, 141) zur Drehung durch das Lager (44) gelagert ist.

8. Getriebe nach einem der vorhergehenden Ansprüche, wobei die mindestens eine Kupplung (13, 113) eine normalerweise eingerückte Trockenreibkupplung ist.

## Revendications

1. Transmission de véhicule à moteur comprenant :
une boîte de vitesses ayant au moins un arbre d'entrée (11, 111) ;
une unité d'embrayage (12) ayant au moins un embrayage (13, 113) utilisable pour accoupler le vilebrequin (14) pour qu'il tourne avec ledit au moins un arbre d'entrée (11, 111), dans laquelle ledit au moins un embrayage (13, 113) inclut une partie entraînée (48, 50, 148, 150) accouplée pour tourner avec ledit au moins un arbre d'entrée (11, 111) et une partie d'entraînement (41, 52, 54, 141, 152, 154) accouplée pour tourner avec le vilebrequin (14) ; et
un palier (44) qui supporte en rotation la partie d'entraînement (41, 52, 54, 141, 152, 154) sur ledit au moins un arbre d'entrée (11, 111) et qui est apte à résister à des charges axiales, le palier (44) ayant un chemin de roulement interne qui est monté sur ledit au moins un arbre d'entrée (11, 111) et un chemin de roulement externe qui est verrouillé ou retenu axialement par rapport à la partie d'entraînement (41, 52, 54, 141, 152, 154) ;
**caractérisée en ce que** le chemin de roulement interne du palier (44) est verrouillé ou retenu axialement sur les deux côtés par rapport audit au moins un arbre d'entrée (11, 111) et **en ce que** le chemin de roulement externe du palier (44) est verrouillé ou retenu axialement sur les deux côtés par rapport à la partie d'entraînement (41, 52, 54, 141, 152, 154), de telle manière que les forces axiales résultant de l'actionnement dudit au moins un embrayage (13, 113) soient transmises par le biais du palier (44) audit au moins un arbre d'entrée (11, 111).

2. Transmission selon la revendication 1, dans laquelle le palier (44) est un roulement à billes radial.

3. Transmission selon la revendication 1 ou la revendication 2, dans laquelle la boîte de vitesses a deux arbres d'entrée coaxiaux (11, 111), à savoir un arbre interne (11) et un arbre creux externe (111), dans laquelle l'unité d'embrayage (12) a deux embrayages (13, 113) utilisables pour accoupler le vilebrequin (14) pour qu'il tourne avec l'arbre d'entrée interne (11) et l'arbre d'entrée externe (111), respectivement, et dans laquelle le palier (44) supporte les parties d'entraînement (41, 52, 54, 141, 152, 154) des deux embrayages (13, 113) pour qu'elles tournent sur l'arbre d'entrée externe (111).

4. Transmission selon la revendication 3, dans laquelle les parties d'entraînement (41, 52, 54, 141, 152, 154) des deux embrayages (13, 113) comprennent chacune un élément de butée (41, 141) respectif censé être accouplé pour tourner avec le vilebrequin (14), dans laquelle les parties entraînées (48, 50, 148, 150) des deux embrayages (13, 113) comprennent chacune une plaque de friction (48, 148) respective qui est accouplée pour tourner avec un arbre d'entrée (11, 111) respectif et est configurée pour être serrée contre l'élément de butée (41, 141) respectif, et dans laquelle les deux éléments de butée (41, 141) sont supportés en rotation par le palier (44).

5. Transmission selon la revendication 4, dans laquelle le chemin de roulement externe du palier (44) est serré axialement entre une paire d'épaulements formés par l'élément de butée (41, 141) des deux embrayages (13, 113).

6. Transmission selon la revendication 1 ou la revendication 2, dans laquelle la boîte de vitesses a un arbre d'entrée (11, 111), dans laquelle l'unité d'embrayage (12) a un embrayage (13, 113) utilisable pour accoupler le vilebrequin (14) pour qu'il tourne avec l'arbre d'entrée (11, 111), et dans laquelle le palier (44) supporte la partie d'entraînement (41, 52, 54, 141, 152, 154) de l'embrayage (13, 113) pour qu'elle tourne sur l'arbre d'entrée (11, 111).

7. Transmission selon la revendication 6, dans laquelle la partie d'entraînement (41, 52, 54, 141, 152, 154) de l'embrayage (13, 113) comprend un élément de butée (41, 141) censé être accouplé pour tourner avec le vilebrequin (14), dans laquelle la partie entraînée (48, 50, 148, 150) de l'embrayage (13, 113) comprend une plaque de friction (48, 148) qui est accouplée pour tourner avec l'arbre d'entrée (11, 111) et est configurée pour être serrée contre l'élément de butée (41, 141), et dans laquelle l'élément de butée (41, 141) est supporté en rotation par le palier (44) sur l'arbre d'entrée (11, 111).

8. Transmission selon l'une quelconque des revendications précédentes, dans laquelle ledit au moins un embrayage (13, 113) est un embrayage à friction à sec normalement mis en prise.
